# EUROPEAN PATENT APPLICATION

(11) **EP 0 779 668 A1**
(43) Date of publication of application: **18.06.1997**
(21) Application number: 96308292.0
(22) Date of filing: 15.11.1996
(51) Int. Cl.: H01M 2/10, B60K 1/04, B60L 11/18

(54) **A battery connector unit for use with an electric vehicle and a metal-air battery**

(30) Priority: 12.12.1995 IL 11634495
(71) Applicant: ELECTRIC FUEL (E.F.L.) LIMITED, P.O. Box 23073 Jerusalem 91230 (IL)
(72) Inventor: Whartman, Jonathan, Mevasseret Zion (IL)
(74) Representative: Baverstock, Michael George Douglas

(57) **Abstract**

A connector unit for use with an electric vehicle and a metal-air battery, said connector unit (10) comprising a battery-supporting platform (16), a plurality of multi-cell, metal-air battery units (20) supported by said platform and attached thereto, a plurality of releasable connector means for at least indirectly structurally connecting said connector unit to said vehicle, and for positioning and supporting said metal-air battery in a predetermined position relative to said vehicle during operation, said platform being provided with air ducts (18) for channelling reaction air, during battery operation, into said multi-cell units of said battery.

## Description

The present invention relates to a battery connector unit for an electric vehicle. More particularly, the invention provides means for removably supporting and positioning a metal-air battery within an electrically propelled road vehicle (EPRV), provision being made for the connector unit to supply reaction air to the battery.

Batteries for EPRVs must be sufficiently large to provide vehicle performance approaching that offered by conventional vehicles powered by internal combustion engines. As is well-known, such batteries, of whatever type, are large, heavy, and composed of many cells which are electrically interconnected to provide the desired balance between voltage and current. Each battery unit must be securely held within a moving, vibrating vehicle, in both the vertical and horizontal planes. At the same time, provision must be made for fast, convenient battery removal and replacement, particularly when the recharging method consists of battery exchange. A further requirement is that the parasitic weight of the connector unit be low enough so as not to unduly compromise the vehicle's performance, particularly when climbing hills.

Electric vehicles may be recharged in any of the following ways:
1. **Electrical recharging while the battery remains in the vehicle.** This method is used, for example, for commercial delivery vans which are locally operated during the day, the recharging being effected through the use of inexpensive electricity at night.
2. **Electrical recharging after battery removal from the vehicle.** The vehicle is provided with a charged battery, without waiting for the recharging of the exhausted battery. This and the following method are appropriate for vehicles which need to be returned to use within a few minutes of entering a service station.
3. **Mechanical recharging after battery removal from the vehicle.** Mechanical recharging of metal-air batteries is usually done by replacing the spent metal anodes. Again, the vehicle is provided with a charged battery without waiting for recharging of the exhausted battery, the latter activity likely being designated to a specialized battery servicing station. Such a refuelling system is described in our co-pending European Patent Application No. 92308404.0.

The present invention provides means for effecting steps of methods 2 and 3 above. These methods become feasible when it is understood that the battery service organization, and not the vehicle owner, is likely to own the battery, or when all the batteries serviced at a refueling location are commonly owned.

Successful EPRVs are conceptually designed to be electrically driven, and in such vehicles an appropriate location for the battery is provided. Such a location is often near the center, lower part of the vehicle; it is not necessarily the same location which an internal combustion engine would occupy in a conventional vehicle.

Metal-air batteries require a flow of air to supply the oxygen required for the chemical reaction which produces electricity; a connector unit for such batteries should include provision for same. Most metal-air batteries also require cooling air, but it is advantageous to arrange separate air flows for these different purposes, as reaction air is preferably chemically purified before use, while cooling air need only be reasonably free of particulate matter.

Battery connector units are described in recent U.S. Patents 5,301,765; 5,378,555; 5,390,754 and 5,392,873. These documents cite many other previous specifications.

In U.S. Patent 5,392,873 (Masuyama, et al.) there is described and claimed a box-like structure which has, in at least one embodiment, provision for driving cooling air across the outer surfaces of the battery unit. However, the box-like structure is large and complex, and so will incur high tooling costs. Moreover, there is no provision for feeding reaction air to each individual cell, as is required for metal-air batteries.

With regard to zinc-air batteries of the type described and claimed by the present inventors in their U.S. Patent No. 5,366,822, it is required that reaction air be fed from below into the battery sub-units, each comprising many battery cells. Prior art connector units are unsuitable for this purpose.

The present invention is therefore intended to obviate the disadvantages of prior art battery connector units, and to provide a suitable connector unit which detachably supports and positions a multi-unit, metal-air battery within an EPRV.

It is a further objective of the present invention to provide a supply of reaction air to the battery cells, supply of such air being made to the lower ports of the battery sub-units.

The present invention achieves the above objectives by providing a connector unit for use with an electric vehicle and a metal-air battery, said connector unit comprising a battery-supporting platform; a plurality of multi-cell, metal-air battery units supported by said platform and attached thereto; a plurality of releasable connector means for at least indirectly structurally connecting said connector unit to said vehicle, and for positioning and supporting said metal-air battery in a predetermined position relative to said vehicle during operation, said platform being provided with air ducts for channelling reaction air, during battery operation, into said multi-cell units of said battery.

In a preferred embodiment of the present invention, there is provided a battery connector unit wherein said releasable connector means interlink with complementary connecting means provided on said vehicle for structurally and selectively connecting and disconnecting said connector unit to the underside surface of said vehicle. Furthermore, in said preferred embodiment the metal-air battery held by said connector unit is vertically restrained by contact with a plurality of resilient pads provided on the underside of said vehicle; said connector unit, when assembled to said vehicle by said releasable connector means, pressing said battery upwards against said pads.

In a most preferred embodiment of the present invention, there is provided a battery connector unit wherein the metal-air battery is comprised of a plurality of multi-cell sub-units housed in a common container, each of said sub-units comprising at least twenty metal-air cells. In this most preferred embodiment, the air ducts are aligned with, and lead into, each of said sub-units.

It will thus be realized that the novel connector unit of the present invention particularly serves the requirements of metal-air batteries. In preferred embodiments of the connector unit, all the services required by such a battery are provided on a common, removable platform which can be conveniently and quickly attached to, and detached from, the EPRV. Aside from mechanical fastening of the connector unit, the only other connection is that of a multi-pin electrical plug and socket, which carries battery power to the vehicle.

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
- Fig. 1: is a fragmented, perspective view of a preferred embodiment of the connector unit according to the invention, shown attached to an EPRV;
- Fig. 2: is a fragmented, perspective view of a second embodiment of a connector unit including a scrubber;
- Fig. 3: is a detailed view of an embodiment of a connector provided with exhaust ducts;
- Fig. 4: is a side view of a connector unit, showing a preferred method of attachment to an EPRV;
- Fig. 5: is a detailed view of a battery unit supported on a connector unit;
- Fig. 6: is a perspective view of a side-loading embodiment, shown in its pulled-out position;
- Fig. 7: is a side view of a battery unit held by anchor members to the support platform, and
- Fig. 8: is a detailed, sectional elevational view of a battery unit positioned at the air ducts of the support platform by projections releasably engageable with recesses in said air ducts.

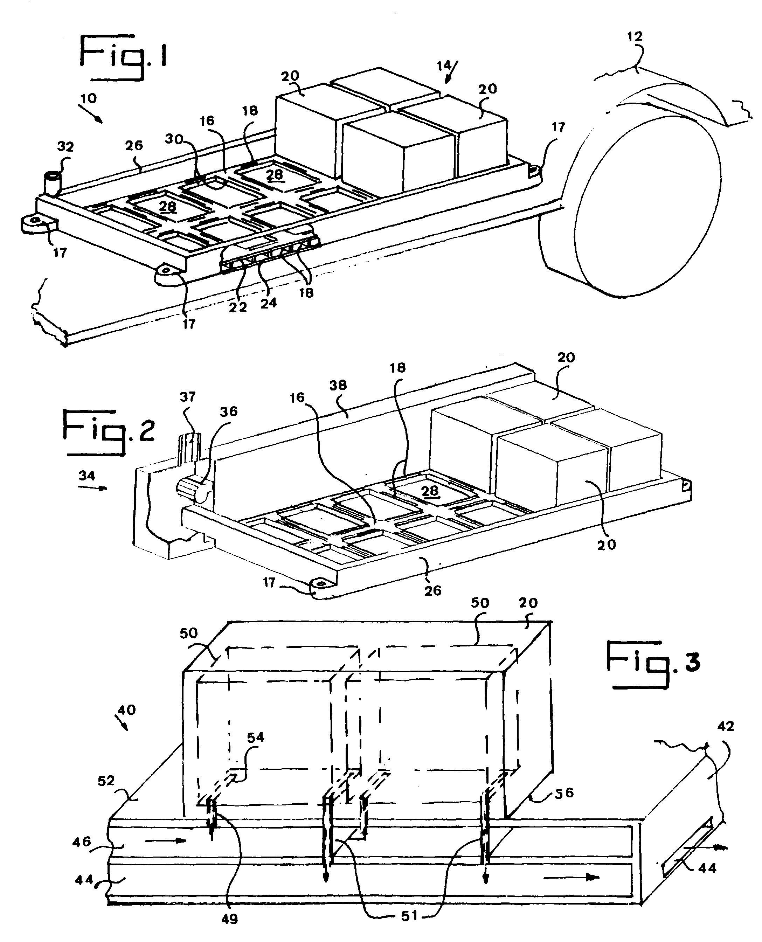

There is seen in Fig. 1 a battery connector unit 10 for use with an electric vehicle 12 and a multi-unit, metal-air battery 14. The connector unit 10 comprises, as its central component, a battery-supporting platform 16. A material providing a suitably high strength/weight ratio which can be used for construction of unit 10 is glass fiber-reinforced polyester. This material also displays good chemical resistance, which is necessary as alkaline electrolyte used in battery 14 may occasionally drip onto platform 16.

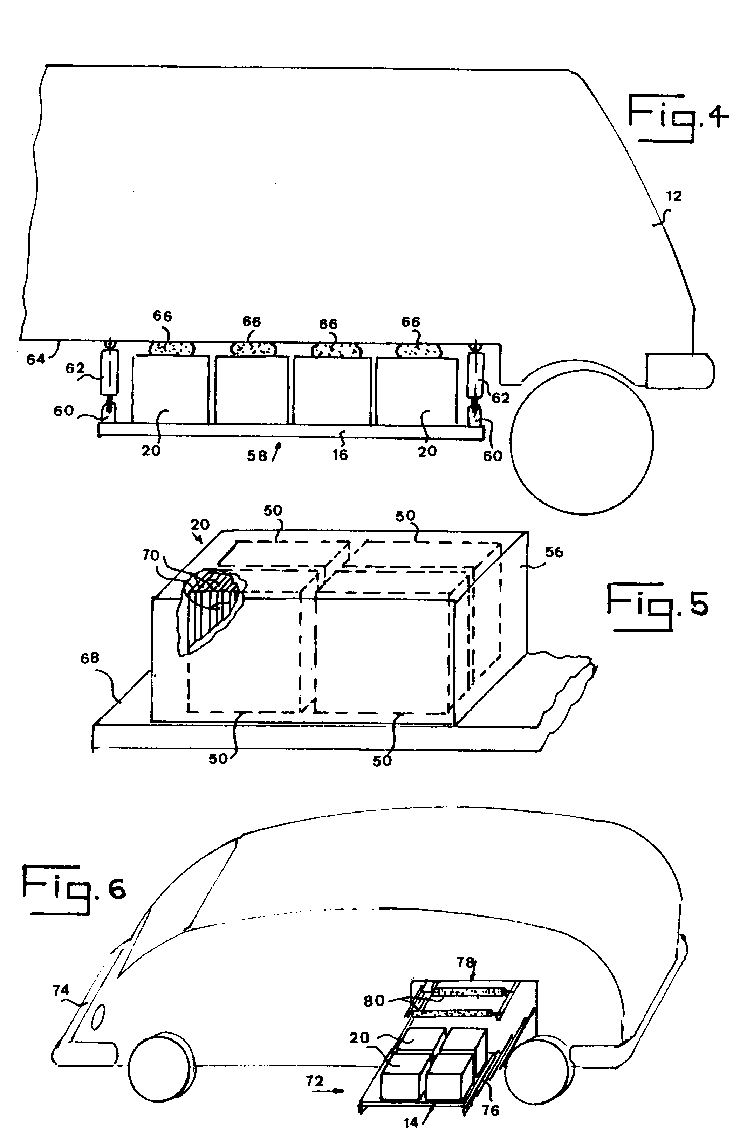

A plurality of releasable connector means, such as the bolt-down lugs 17 shown, structurally connect the unit 10 to the vehicle. Two further embodiments of such connector means are shown and described with reference to Figs. 4 and 6. Unit 10 positions and supports the metal-air battery 14 in a predetermined poistion relative to vehicle 12 during its operation.

Platform 16 is provided with air ducts 18 for channelling reaction air, during operation of the battery, into individual multi-cell metal-air battery units 20 supported thereon. The ducts 18 are conveniently formed between a pair of parallel, spaced-apart, plate-like members 22, 24 which form platform 16. An outer ridge 26 surrounding platform 16 restrains battery units 20 and also adds stiffness to the platform. Weight is saved by rectangular apertures 28, which pierce the platform 16. Apertures 28 are surrounded by vertical strips 30, which seal platform 16 and add further stiffness. An air inlet port 32 leads into ducts 18. In this embodiment, slightly pressurized air is supplied to port 32 from a blower (not shown) in vehicle 12, which blower is also used for supplying fresh air to the passenger cabin.

The battery connector unit 10 is preferably supplied with a plurality of at least three multi-cell, metal-air battery units 20, which are supported by and attached to the unit 10. The connector unit 10 shown in Fig. 1 has room to hold twelve such units, four of which are shown.

Referring now to Fig. 2, similar numerals are used for identifying similar parts.

There is seen a battery connector unit 34, further comprising a blower unit 36 for moving reaction air through ducts 18. Unlike embodiment 10 described above with reference to Fig. 1, unit 34 is not dependent on a pressurized air supply from vehicle 12. Consequently, it is easier to connect unit 34 to the vehicle 12 and to disconnect it therefrom. Air inlet port 37 is open to the atmosphere.

As has been stated above, metal-air batteries require a flow of air to supply the oxygen needed for the chemical reaction which produces electricity. Embodiment 34 includes provision for supplying air at above atmospheric pressure. The reaction air is preferably chemically purified before use, and for this purpose the connector unit 34 further comprises a CO₂ scrubber unit 38 in fluid communication with blower unit 36 and the air channel ducts 18. Scrubber unit 38 is preferably of the type fully described in our U.S. Patent Application No. 08/210,333.

Fig. 3 shows a detail of battery connector unit 40, wherein platform 42 further comprises a plurality of exhaust ducts 44 for venting used reaction air from the battery units 20 to the atmosphere. Accordingly, two sets of ducts 44, 46 are contained in the connector unit 40: ducts 46 lead to the battery units 20, and ducts 44 lead therefrom. Advantageously, the air ducts 44, 46 have outlets aligned with each battery sub-unit 50, which sub-units are divisions of the battery units 20.

Duct connectors 49, 51 project upwards above the platform surface 52 and enter corresponding apertures 54 on the lower face of battery unit casing 56. It will be understood that this arrangement, apart from serving to feed reaction air to and from the battery sub-units 20, also serves to mechanically restrain the battery units 20 in both horizontal positions.

Fig. 4 illustrates a battery connector unit 58 similar to unit 10 described above with reference to Fig. 1, however, connector means 60 releasably interlink with complementary connecting means 62 provided on the vehicle 12, for structurally and selectively connecting and disconnecting the connector unit 58 on an underside surface 64 of vehicle 12.

In the embodiment of Fig. 4, the metal-air battery units 20 are vertically restrained by contact with a plurality of resilient pads 66 provided on the underside surface 64 of vehicle 12. Pads 66 shown are suitably made of flexible polyurethane foam. In an alternative embodiment (not shown), the pads commprise short steel compression springs.

The connector unit 58, when assembled to vehicle 12 by the releasable connecting means 62, presses the battery units 20 upwards against pads 66. The advantage of this arrangement lies in the easy removability of battery units 20 for servicing, as release of connector unit 58 automatically releases battery units 20. Furthermore, weight and cost are saved by making use of the existing vehicle underside surface 64.

Referring now to Fig. 5, there is seen a part of a battery connector unit 68 holding metal-air battery units 20. The units 20 are comprises of a plurality of multi-cell sub-units 50, housed in a common container casing 56. Each sub-unit 50 comprises at least twenty metal-air cells 70. Such cells have been fully described in our U.S. Patents Nos. 5,366,822 and 5,360,680.

Metal-air battery units 20 are each comprised of at least three sub-units 50, housed in a common container casing 56. Holding battery cells in units and sub-units facilitates servicing of the battery, and enhances mechanical restraint during its use.

Fig. 6 depicts a battery connector unit 72 most suitable for a vehicle 74, which has been designed from conception for electric propulsion. Unit 72 is horizontally slidable on rails 76 into the vehicle 74, typically as shown, into the vehicle side. Rails 76 may suitably comprise a pair of commercially available steel telescopic slides. In the outermost position shown, the connector unit 72, complete with its battery 14 and any accessories, can be lifted out, by use of a suitable forklift, for servicing and replacement, or slid onto a trolley or other receiving means. When the connector unit is in its pushed-in position, the metal-air battery units 20 are restrained by releasable locking means 78.

In the embodiment shown, locking means 78 comprise a series of parallel, compressible rollers 80 revolvably attached to vehicle 74. These allow horizontal movement to battery units 20 passing below them, but provide vertical restraint.

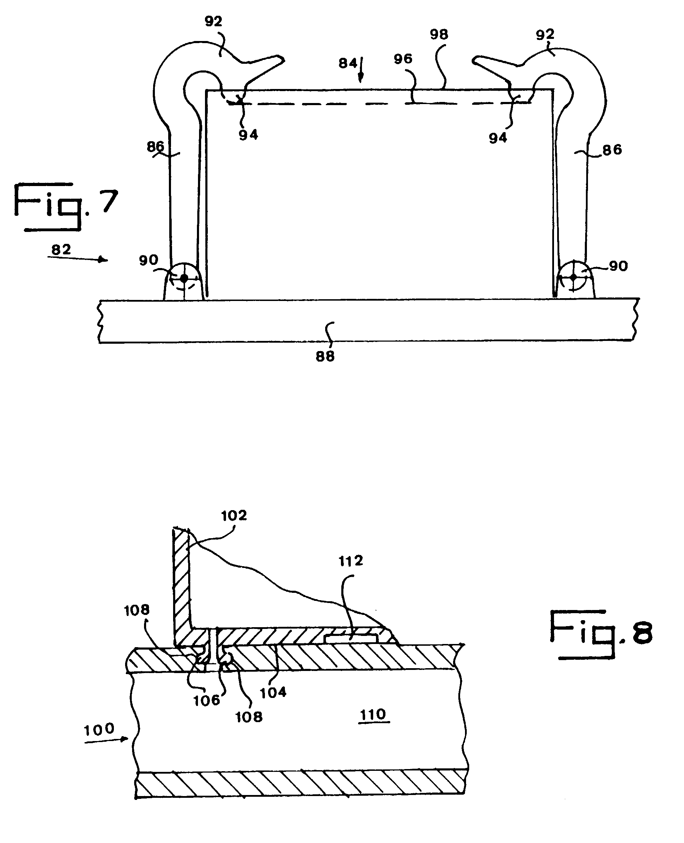

Seen in Fig. 7 are the details of a connector unit 82, wherein metal-air battery units 84 are vertically and horizontally restrained by a plurality of resilient anchor members 86. Each member 86, suitably made of a polyamide resin, is attached to support platform 88 at its lower extremity 90. Its upper extremity 92 is formed to include a downward-facing projection 94, shaped to be engageable to a peripheral ridge 96 provided along the top 98 of each battery unit 84. Several such anchor members 86 are provided for each battery unit 84, to hold each unit securely in place. Anchor members 86 are easily and quickly engaged or released by hand, without the need for tools.

With reference to Fig. 8, there is illustrated a detailed view of a further connector unit 100. Metal-air battery units 102 are provided on a lower face 104 with projections 106, releasably engageable with recesses 108 provided in air ducts 110. Such engagement provides the required vertical restraint in a compact form for battery units 102. Two-directional horizontal restraint is also provided by the mating projections 106 and recesses 108. Engagement is achieved by applying hand pressure to the tops of battery units 102.

A hollow 112, located on lower edge 110, allows the insertion of a tool such as a screwdriver for effecting disengagement of the battery unit 102 from the connector unit 100. This embodiment of vertical restraint is particularly cost-effective, as use is made of air duct connections which are, in any case, required for their own purpose.

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A connector unit for use with an electric vehicle and a metal-air battery, said connector unit comprising:
a battery-supporting platform;
a plurality of multi-cell, metal-air battery units supported by said platform and attached thereto;
a plurality of releasable connector means for at least indirectly structurally connecting said connector unit to said vehicle, and for positioning and supporting said metal-air battery in a predetermined position relative to said vehicle during operation,
said platform being provided with air ducts for channelling reaction air, during battery operation, into said multi-cell units of said battery.

2. The battery connector unit as claimed in claim 1, said unit further comprising at least one blower unit for moving reaction air through said ducts.

3. The battery connector unit as claimed in claim 2, said unit further comprising a CO₂ scrubber unit in fluid communication with said at least one blower unit and said air ducts.

4. The battery connector unit as claimed in claim 1, wherein said platform further comprises a plurality of exhaust ducts for venting used reaction air from said battery units to the atmosphere.

5. The battery connector unit as claimed in claim 1, in combination with at least three multi-cell, metal-air battery units supported thereby and attached thereto.

6. The battery connector unit as claimed in claim 1, wherein said releasable connector means interlink with complementary connecting means provided on said vehicle for structurally and selectively connecting and disconnecting said connector unit to the underside surface of said vehicle.

7. The battery connector unit as claimed in claim 1, wherein said metal-air battery units are comprised of a plurality of multi-cell sub-units housed in a common container, each of said sub-units comprising at least twenty metal-air cells.

8. The battery connector unit as claimed in claim 7, wherein said metal-air battery units are comprised of at least three sub-units housed in a common container.

9. The battery connector unit as claimed in claim 7, wherein said air ducts are aligned with, and lead into, each of said sub-units.

10. The battery connector unit as claimed in claim 6, wherein said metal-air battery units are is vertically restrained by contact with a plurality of resilient pads provided on the underside of said vehicle; said connector unit, when assembled to said vehicle by said releasable connector means, pressing said battery units upwards against said pads.

11. The battery connector unit as claimed in claim 1, wherein said unit is horizontally slidable on rails into said vehicle, said metal-air battery units being vertically and horizontally restrained by contact with releasable locking means.
